# EUROPÄISCHE PATENTSCHRIFT

(11) **EP 2 207 708 B1**
(45) Veröffentlichungstag und Bekanntmachung des Hinweises auf die Patenterteilung: **02.03.2011**
(21) Anmeldenummer: 08802742.0
(22) Anmeldetag: 02.10.2008
(51) Int. Cl.: B62D 1/19, B62D 1/187

(54) **LENKSÄULE FÜR EIN KRAFTFAHRZEUG**
STEERING COLUMN FOR A MOTOR VEHICLE
COLONNE DE DIRECTION POUR VÉHICULE À MOTEUR

(30) Priorität: 08.10.2007 DE 102007048208
(43) Veröffentlichungstag der Anmeldung: 21.07.2010
(73) Patentinhaber: ThyssenKrupp Presta Aktiengesellschaft, 9492 Eschen (LI)
(72) Erfinder: SCAPOZZA, Matteo, CH-6500 Bellinzona (CH)
(74) Vertreter: Hofmann, Ralf U.
(86) Internationale Anmeldenummer: PCT/EP2008/008334
(87) Internationale Veröffentlichungsnummer: WO 2009/046926

(56) Entgegenhaltungen:
- EP-A- 1 600 355
- JP-A- 11 029 051

## Beschreibung

Die Erfindung bezieht sich auf eine Lenksäule für ein Kraftfahrzeug mit einer eine Lenkspindel tragenden Konsoleneinheit, die mittels Befestigungsbolzen an einem fahrzeugfesten Teil gehalten ist, wobei die Befestigungsbolzen Langlöcher in der Konsoleneinheit oder im fahrzeugfesten Teil durchsetzen und die Konsoleneinheit im Crashfall ausgehend von einer Ausgangsstellung unter Verschiebung der Befestigungsbolzen in den Langlöchern gegenüber dem fahrzeugfesten Teil verschiebbar ist, wobei ein jeweiliges Langloch zumindest über einen Teil seiner Längserstreckung in einem Haltestreifen angeordnet ist, der in der Ausgangsstellung der Konsoleneinheit eine Biegung aufweist und wobei nach dem Crash die Konsoleneinheit über die Haltestreifen nach wie vor am fahrzeugfesten Teil angehängt ist.

Lenksäulen, bei denen eine die Lenkspindel tragende Konsoleneinheit derart mit einem fahrzeugfesten Teil verbunden ist, dass im Crashfall eine Verschiebung der Konsoleneinheit gegenüber dem fahrzeugfesten Teil ermöglicht wird, sind in unterschiedlichen Ausführungsformen bekannt. Beispielsweise geht aus der DE 10 2006 020 650 B3 eine Lenksäule hervor, bei der die Konsoleneinheit als von einer fahrzeugfesten Montageeinheit geführter Schlitten ausgebildet ist. Die Konsoleneinheit weist beidseitig in Längsrichtung der Lenkspindel verlaufende Nuten auf, in welche gegeneinander gerichtete.Vorsprünge der Montageeinheit eingreifen. Zur Energieaufnahme bei der Verschiebung der Konsoleneinheit gegenüber der Montageeinheit im Crashfall sind zusätzlich zwischen der Konsoleneinheit und der Manteleinheit wirkende energieaufzehrende Mittel vorgesehen.

Aus der EP 0479 455 A2 geht eine Lenksäule hervor, bei der eine die Lenkspindel tragende Konsoleneinheit über Befestigungsbolzen mit einem fahrzeugfesten Teil verbunden ist. Die Befestigungsbolzen durchsetzen in der Konsoleneinheit ausgebildete Langlöcher, wodurch eine Verschiebung der Konsoleneinheit gegenüber dem fahrzeugfesten Teil im Crashfall ermöglicht wird. Die Langlöcher weisen hierbei jeweils einen vergrößerten Abschnitt auf, der vom Befestigungsbolzen in der Ausgangsstellung der Konsoleneinheit durchsetzt wird. Im restlichen Bereich ist die Breite des Langlochs kleiner als der Durchmesser des Befestigungsbolzens, wodurch eine Energieabsorption bei der Verschiebung der Konsoleneinheit im Crashfall erreicht wird. Weitere Lenksäulen, bei denen Tragbolzen Langlöcher in einer Konsoleneinheit durchsetzen und in diesen im Crashfall verschoben werden, sind aus der US 3 769 851 und US 6 378 903 B1 bekannt. Jeweils erfolgt eine Energieabsorption durch ein Zusammenwirken des Befestigungsbolzens mit dessen Verschiebung im Langloch behindernden Ausbildungen des Langlochs. Ein Nachteil dieser Lenksäulen ist die für die Ausbildung der Langlöcher erforderliche Baulänge.

Bekannt ist es weiters, dass die Befestigung der Konsoleneinheit an einem fahrzeugfesten Teil mittels Befestigungsbolzen durch Löcher bzw. Ausnehmungen der Konsoleneinheit erfolgt, die zum lenkradseitigen Rand der Lenksäule hin offen sind. Im Crashfall kann sich die Konsoleneinheit vom fahrzeugfesten Teil lösen, wobei es unvorteilhafterweise zu einem Herabfallen des fahrerseitigen Abschnitts der Lenksäule auf die Beine des Fahrers kommt. Besonders bei Lenksäulen mit in die Lenksäule integrierter Lenkkraft-Unterstützungsvorrichtung, welche ein höheres Gewicht aufweisen, ist dies nachteilig.

Aus der US 6 523 432 B1 ist eine Lenksäule bekannt, bei der die Konsoleneinheit im Crashfall vom fahrzeugfesten Teil lösbar ist. Das die Lenkspindel drehbar lagernde Mantelrohr ist bei seinem lenkradfernen Ende mit einem Halteblech versehen, welches ein Langloch aufweist, das von einem Bolzen zur verschiebbaren Befestigung des Mantelrohrs an einem fahrzeugfesten Teil durchsetzt wird.

Aus der EP 1 600 355 A2 geht eine Lenksäule der eingangs genannten Art hervor. Der einteilig mit der Konsoleneinheit ausgebildete Haltestreifen ist U-förmig umgebogen und der Befestigungsbolzen erstreckt sich durch ein über den Haltesteifen verlaufendes Langloch und ein Loch im Bereich des Endes des U-förmig umgebogenen Abschnitt des Haltestreifens.

Aus der JP 11 029 051 geht die Befestigung einer Konsoleneinheit einer Lenksäule an einem fahrzeugfesten Teil mittels eines umgefalteten Haltesteifens hervor. Die Konsoleneinheit ist zwischen umgefalteten Abschnitten des Haltestreifens geklemmt, die an ein Ende des Haltestreifens anschließen. Diese umgefalteten Abschnitte liegen innerhalb umgefalteter Abschnitte, die an das andere Ende des Haltestreifens anschließen. Langlöcher des Haltestreifens werden von einem Befestigungsbolzen durchsetzt. Im Crashfall kann der Haltebolzen bei einer Verschiebung der Konsoleneinheit aus dem Langloch heraustreten, welches den umgefalteten Abschnitten durchsetzt, zwischen denen die Konsoleneinheit geklemmt ist.

Aufgabe der Erfindung ist es eine Lenksäule der eingangs genannten Art bereitzustellen, bei der sich im Crashfall die Konsoleneinheit gegenüber dem fahrzeugfesten Teil verschieben kann, ohne dass es zu einer vollständigen Lösung der Verbindung zwischen der Konsoleneinheit und dem fahrzeugfesten Teil kommt, wobei eine kompakte Bauweise erreicht wird. Erfindungsgemäß gelingt dies durch eine Lenksäule mit den Merkmalen des Anspruchs 1.

Durch die Anordnung von Langlöchern in gebogenen Haltestreifen wird eine kompakte Ausbildung der Lenksäule ermöglicht. Im Crashfall (=im Fall eines Fahrzeugcrashes) wird bei einer Verschiebung der Konsoleneinheit gegenüber dem fahrzeugfesten Teil die Biegung der Haltestreifen durch ein Zusammenwirken mit den in den Langlöchern sich verschiebenden Befestigungsbolzen bzw. auf den Befestigungsbolzen angeordneten Teilen, wie Muttern oder Beilagscheiben, zumindest verringert, d.h. die Biegung wird verringert oder aufgehoben. Mit anderen Worten wird ein jeweiliger Haltestreifen bei der Verschiebung des Befestigungsbolzens in diesem teilweise oder vollständig geradegebogen.

Vorteilhafterweise sind die Haltestreifen in der Ausgangsstellung der Konsoleneinheit über mindestens 45°, vorzugsweise über mindestens 60° gebogen, d.h. an die Biegung beidseitig anschließende gerade Abschnitte des Haltestreifens weisen zueinander einen Winkel von mindestens 45°, vorzugsweise mindestens 60° auf. In einer vorteilhaften Ausführungsform liegt dieser Winkel im Bereich von 80° bis 100°.

Die die Langlöcher aufweisenden Haltestreifen werden von eigenen Teilen gebildet, die jeweils mit einem anderen Teil der Konsoleneinheit oder des fahrzeugfesten Teils verbunden sind. Vorzugsweise sind sie an einem Basisteil der Konsoleneinheit angebracht, beispielsweise angeschweißt.

Das System kann derart ausgebildet sein, dass durch die Verschiebung der Befestigungsbolzen in den Langlöchern nur wenig Energie absorbiert wird. Hierzu können die Haltestreifen vergleichsweise dünn ausgebildet sein, wobei ihre Dicke geringer als ein Basisteil der Konsoleneinheit ist, an dem sie jeweils angebracht sind. Es kann in diesem Fall eine zusätzliche Energieabsorptionseinrichtung vorgesehen sein, um bei der Verschiebung der Konsoleneinheit gegenüber dem fahrzeugfesten Teil Energie zu absorbieren. Die Energieabsorption wird dann im Wesentlichen nur durch diese zusätzliche Energieabsorptionseinrichtung bestimmt. Dies erlaubt es, die absorbierte Energie mittels einer separaten Energieabsorptionseinrichtung genau zu steuern. Derartige Energieabsorptionseinrichtungen sind bekannt.

Andererseits ist es auch denkbar und möglich, die erfindungsgemäße Lenksäule so auszubilden, dass das (teilweise) Geradebiegen der Haltestreifen bei der Verschiebung der Konsoleneinheit gegenüber dem fahrzeugfesten Teil und/oder die Verschiebung des Haltebolzens im Langloch (beispielsweise indem dieses durch den Haltebolzen bei der Verschiebung aufgeweitet wird) zur Energieabsorption herangezogen wird.

Bevorzugterweise handelt es sich bei der erfindungsgemäßen Lenksäule um eine in der Länge und/oder Neigung bzw. Höhe verstellbare Lenksäule, d.h. die Lenkspindel und ein sie drehbar lagerndes Lagerteil sind gegenüber der Konsoleneinheit im geöffneten Zustand einer Feststelleinrichtung in Längsrichtung der Lenkspindel und/oder in der Neigung verstellbar.

Vorzugsweise ist die Konsoleneinheit im Bereich ihres lenkradseitigen Endes mit dem fahrzeugfesten Teil über die Befestigungsbolzen verbunden.

Weitere Vorteile und Einzelheiten der Erfindung werden im Folgenden anhand der beiliegenden Zeichnung erläutert. In dieser zeigen:
- Fig. 1: einen an das lenkradseitige Ende anschließenden Abschnitt einer erfindungsgemäßen Lenksäule in Schrägsicht;
- Fig. 2: die Lenksäule von Figur 1 ohne das fahrzeugfeste Teil und die Befestigungsbolzen;

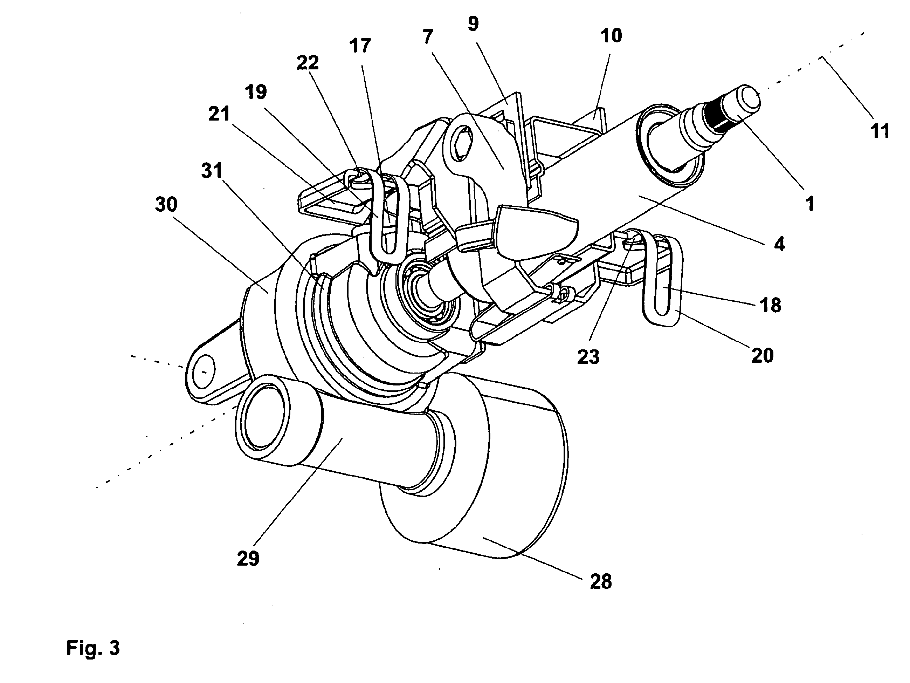

- Fig. 3: eine Darstellung der Lenksäule ohne das fahrzeugfeste Teil und die Befestigungsbol-
- zen: in einer Ansicht von schräg unten;
- Fig. 4 und Fig. 5: die Lenksäule in einer Ansicht von schräg oben und schräg unten im Zustand nach einem Fahrzeugcrash.

Die Lenksäule gemäß dem in den Figuren dargestellten Ausführungsbeispiel der Erfindung umfasst eine von einem Lagerteil 2 drehbar gelagerte Lenkspindel 1, an deren lenkradseitigem Ende 3 ein Lenkrad zu befestigen ist. Das Lagerteil 2 umfasst ein die Lenkspindel 1 umgebendes Mantelrohr 4 und eine am Mantelrohr 4 befestigte Halteeinrichtung, beispielsweise ein angeschweißtes U-Profil 5. Andere Ausbildungen des Lagerteils 2, das auch insgesamt als Mantelrohr oder Manteleinheit bezeichnet werden könnte, sind denkbar und möglich.

Im geschlossenen Zustand einer Feststellvorrichtung ist das Lagerteil 2 unverstellbar gegenüber einer Konsoleneinheit 6 gehalten. Die Konsoleneinheit 6 trägt das Lagerteil 2 und somit die Lenkspindel 1.

Die Feststellvorrichtung wird im gezeigten Ausführungsbeispiel von einem durch Verschwenkung eines Spannhebels 7 verspannbaren Spannbolzen 8 gebildet, der sich kreuzende Langlöcher in Seitenwangen 9, 10 der Konsoleneinheit 6 und im Lagerteil 2 durchsetzt. Im geschlossenen Zustand der Feststellvorrichtung werden die Seitenwangen 9, 10 der Konsoleneinheit 6 an das Lagerteil 2 (im Ausführungsbeispiel an die Seitenschenkel des U-Profils 5) angepresst. Im geöffneten Zustand der Feststellvorrichtung kann die Lenkspindel 1 zusammen mit dem sie lagernden Lagerteil 2 zur Einstellung der Lenksäule in Richtung der Längsachse 11 der Lenkspindel 1 sowie in der Neigung gegenüber der Konsoleneinheit 6 verstellt werden. Es können dadurch eine Längen- und Neigungs- bzw. Höhenverstellung der Lenksäule realisiert werden. Derartige Einrichtungen zur Längen und/oder Neigungs- bzw. Höhenverstellung und Feststellvorrichtungen hierfür sind bekannt. Die Feststellung im geschlossenen Zustand der Feststellvorrichtung kann in bekannter Weise durch Reibschluss, durch Formschluss oder durch eine Kombination hiervon erreicht werden. Aus dem Stand der Technik sind in unterschiedlicher Weise ausgebildete Feststellvorrichtungen bekannt. Die genaue Ausbildung der Feststellvorrichtung ist nicht Gegenstand der vorliegenden Erfindung.

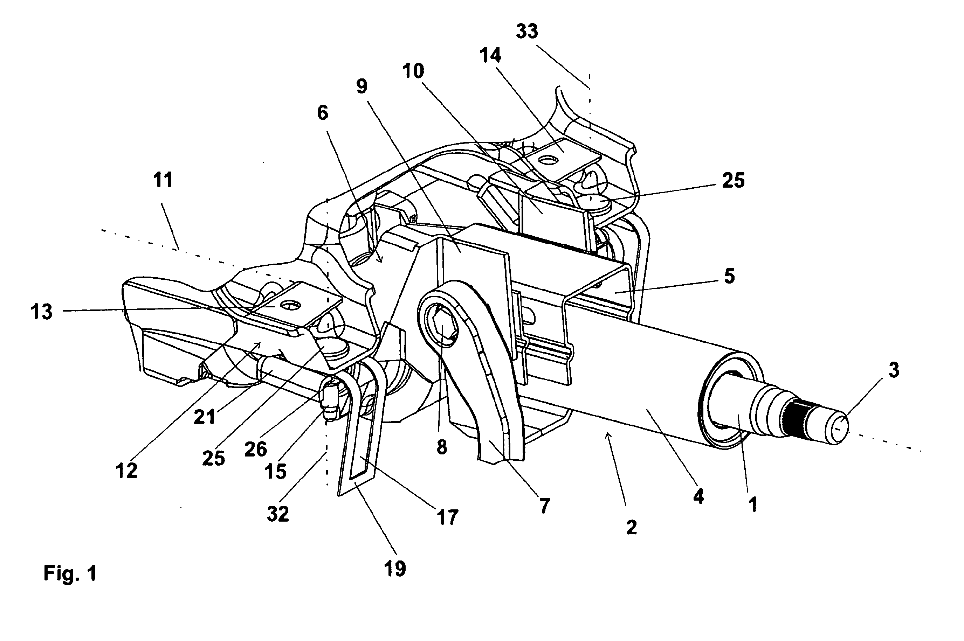

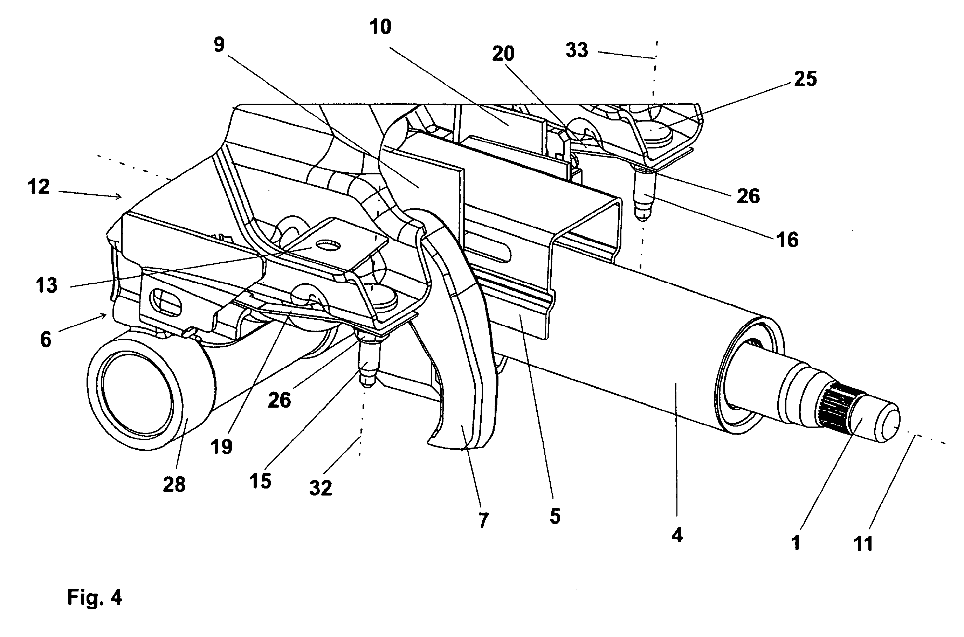

Die Konsoleneinheit 6 wird von einem fahrzeugfesten Teil 12 gehalten. Dieses wird im gezeigten Ausführungsbeispiel von einem mit dem Fahrzeugchassis verbundenen Querträger gebildet. Beispielhaft sind in den Figuren 1 und 4 Befestigungslaschen 13, 14 zur starren Befestigung des fahrzeugfesten Teils 12 am Fahrzeugchassis mittels Verschraubungen dargestellt.

Zur Verbindung der Konsoleneinheit 6 mit dem fahrzeugfesten Teil 12 dienen Befestigungsbolzen 15, 16 mit den Längsachsen 32, 33. Diese durchsetzen jeweils eine Bohrung im fahrzeugfesten Teil 12 und ein Langloch 17, 18 in der Konsoleneinheit 6. Die Langlöcher 17, 18 sind hierbei in Haltestreifen 19, 20 angeordnet, welche mit einem hinteren Ende (= einem dem fahrzeugseitigen Ende der Lenkspindel 1 abgewandtes Ende) an einem Basisteil 21 der Konsoleneinheit 6 befestigt, beispielsweise angeschweißt sind. Im Bereich dieses am Basisteil 21 befestigten Endes überdeckt sich ein Abschnitt des Langlochs 17, 18 des Haltestreifens 19, 20 mit einer Öffnung bzw. Ausnehmung 22, 23 des Basisteils 21, welche zum lenkradseitigen Rand des Basisteils 21 hin offen ist.

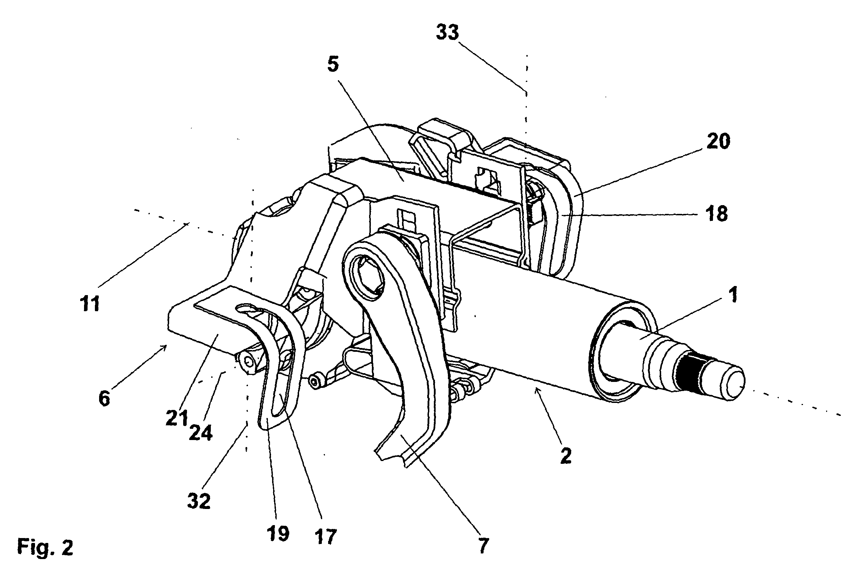

Die Haltestreifen 19, 20 und die in ihnen angeordneten Langlöcher 17, 18 weisen in der Ausgangsstellung der Konsoleneinheit (= wenn kein Fahrzeugcrash eingetreten ist) einen gebogenen Verlauf auf. Die in Figur 2 angedeutete Achse 24 der Biegung liegt rechtwinklig zur Längsachse 11 der Lenkspindel und horizontal bzw. rechtwinklig zur Längsachse 32, 33 des Befestigungsbolzens 15, 16 (vor einem Crashfall). Wenn man vom ungebogenen Haltestreifen 19 ausgeht, so erfolgt die Biegung um eine Achse 24, die parallel zur Ebene des Haltestreifens 19 bzw. in der Ebene der Ausnehmung 22, 23 an der Konsoleneinheit 6 und rechtwinklig zur Längserstreckung des Haltestreifens liegt.

Das freie Ende des jeweiligen Haltestreifens weist im Montagezustand der Lenksäule nach unten, in einem Winkelbereich von plus minus 45° zur Längsachse des jeweiligen Befestigungsbolzens 15, 16. Auch eine Ausbildung, in der das freie Ende des jeweiligen Haltestreifens nach oben weist, im zuvor genannten Winkelbereich, ist denkbar und möglich.

Anschließend an den gebogenen Bereich besitzt der jeweilige Haltestreifen 19, 20 sowohl zu seinem an der Konsoleneinheit 6 befestigten als auch zu seinem freien Ende hin einen ungebogenen, d.h. in einer Ebene liegenden Abschnitt. Das Langloch 17, 18 erstreckt sich über den gebogenen Abschnitt und über Teile der daran anschließenden ungebogenen Abschnitte.

Ein jeweiliger Haltestreifen 19, 20 weist im gezeigten Ausführungsbeispiel eine geringere Steifigkeit als das Basisteil 21 auf. Hierzu besteht er vorzugsweise wie gezeigt aus einem dünneren Blech als das Basisteil 21.

In der Ausgangsstellung der Konsoleneinheit 6 erstreckt sich ein jeweiliger Befestigungsbolzen 15, 16 durch die Ausnehmung 22, 23 des Basisteils 21 und durch den von diesem überdeckten Abschnitt des Langlochs 17, 18. Das fahrzeugfeste Teil 12 und die Konsoleneinheit 6 liegen zwischen einem Kopf 25 des jeweiligen Befestigungsbolzens 15, 16 und einer von einer Mutter 26 gehaltenen Beilagscheibe 27.

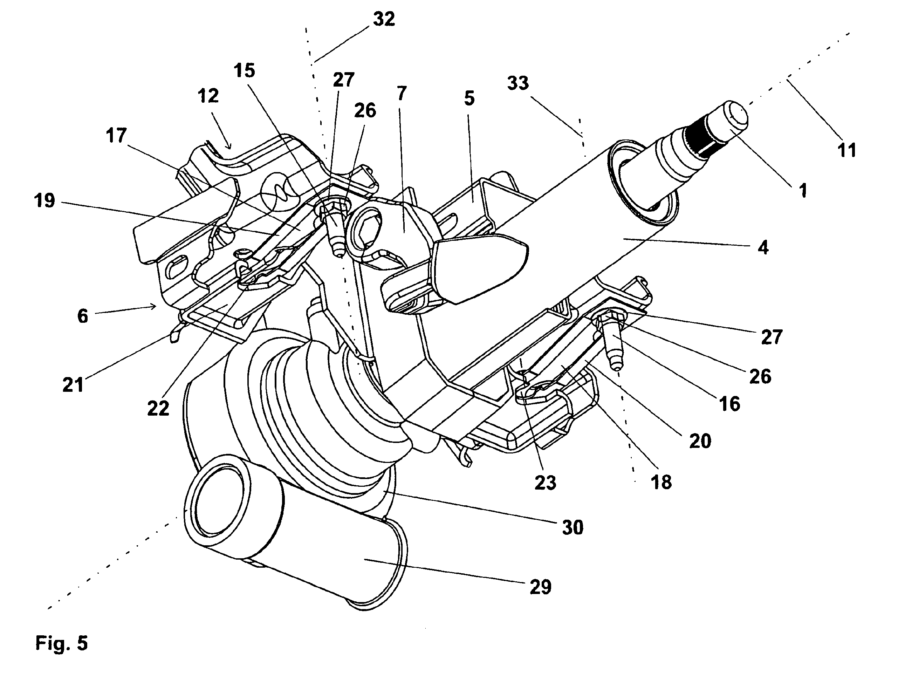

Im Fall eines Fahrzeugcrashes kann es zu einer Verschiebung der Konsoleneinheit 6 gegenüber dem fahrzeugfesten Teil 12 kommen, wobei sich die Konsoleneinheit 6 in Richtung zur Fahrzeugfront bewegt. Hierbei gelangen die Befestigungsbolzen 15, 16 außer Eingriff mit den Ausnehmungen 22, 23 im Basisteil 21 und verschieben sich entlang der Langlöcher 17, 18 in den Haltestreifen 19, 20. Die Haltestreifen 19, 20 werden durch das Zusammenwirken mit den auf den Befestigungsbolzen 15, 16 angeordneten Beilagscheiben 27 hierbei weitgehend geradegebogen. Nach dem Crash ist die Konsoleneinheit 6 über die Haltestreifen 19, 20 nach wie vor am fahrzeugfesten Teil 12 angehängt, wie dies aus den Figuren 4 und 5 ersichtlich ist. Es kann dabei zwar zu einer gewissen Absenkung der Konsoleneinheit 6 kommen, diese ist vorzugsweise aber geringer als die Hälfte des Verschiebeweges in Richtung der Längsachse 11 der Lenkspindel 1.

In der Ausgangsstellung sind die Konsoleneinheit 6 und das fahrzeugfeste Teil 12 über die Befestigungsbolzen 15, 16 vorzugsweise miteinander verspannt. Dadurch wird auch eine Losbrechkraft für den Beginn einer Verschiebung der Konsoleneinheit 6 gegenüber dem fahrzeugfesten Teil 12 definiert. Wenn die Befestigungsbolzen 15, 16 den Bereich der Ausnehmungen 22, 23 verlassen haben, so kann die weitere von den Haltestreifen 19, 20 gegen eine Verschiebung aufgebrachte Kraft vergleichsweise gering sein.

Andererseits wäre es auch denkbar möglich, die Verschiebung der Befestigungsbolzen 15, 16 in den Langlöchern 17, 18 der Haltestreifen 19, 20 zur signifikanten Energieabsorption heranzuziehen. Eine solche könnte insbesondere durch die Biegung der Haltestreifen 19, 20 und/oder durch ein Zusammenwirken der Befestigungsbolzen 15, 16 mit den Rändern der Langlöcher 17, 18 bewirkt werden.

Die dargestellte Lenksäule weist eine elektrische Lenkkraft-Unterstützung auf, wobei ein Elektromotor 28 über eine Schnecke 29 und ein Schneckenrad 30 mit einem Getriebe 31 zur Einleitung der Hilfskraft verbunden ist.

Die Erfindung kann auch bei Lenksäulen ohne Lenkkraft-Unterstützung eingesetzt werden.

Auf einem jeweiligen Befestigungsbolzen 15, 16 können auch zusätzliche Teile, beispielsweise Beilagscheiben angeordnet sein. Auch eine umgedrehte Anordnung bei der der Kopf 25 bzw. eine unter diesem angeordnete Beilagscheibe mit dem Haltestreifen 19, 20 zusammenwirkt und die Mutter 26 auf der Seite des fahrzeugfesten Teils 12 angeordnet ist, kann vorgesehen sein. Anstelle eines Kopfes 25 könnten auch beidseitig Muttern vorgesehen sein.

Beim fahrzeugfesten Teil 12 könnte es sich auch um ein weiteres Montageteil der Lenksäule handeln, welches am Querträger oder an einem anderen Teil des Fahrzeugchassis befestigt wird.

Die Haltestreifen 19, 20 bestehen vorzugsweise aus Metall. Das Basisteil 21 besteht bevorzugterweise aus Metall.

Die Erfindung könnte auch im Zusammenhang mit nicht-verstellbaren Lenksäulen eingesetzt werden. Auch eine "kinematische Umkehr" des in den Figuren dargestellten Ausführungsbeispiels ist denkbar und möglich. Die Haltestreifen 19, 20 könnten in diesem Fall an einem Basisteil des fahrzeugfesten Teils 12 angebracht sein, von dem ausgehend sie in diesem Fall in eine vom lenkradseitigen Ende 3 der Lenkspindel 1 weggerichtete Richtung verlaufen würden. Das Basisteil des fahrzeugfesten Teils könnte zu seinem lenkradfernen Ende hin offene Öffnungen aufweisen, die im Ausgangszustand von den Befestigungsbolzen 15, 16 durchsetzt werden, um im Ausgangszustand die Konsoleneinheit 6 mit dem fahrzeugfesten Teil 12 zu verspannen.

Denkbar und möglich wäre es auch, dass ein jeweiliges Langloch über einen Abschnitt seiner Erstreckung im Haltestreifen und über seine restliche Erstreckung im Teil verläuft, an dem der Haltestreifen festgelegt ist.

### Legende zu den Hinweisziffern:

- 1: Lenkspindel
- 2: Lagerteil
- 3: lenkradseitiges Ende
- 4: Mantelrohr
- 5: U-Profil
- 6: Konsoleneinheit
- 7: Spannhebel
- 8: Spannbolzen
- 9: Seitenwange
- 10: Seitenwange
- 11: Längsachse
- 12: fahrzeugfestes Teil
- 13: Befestigungslasche
- 14: Befestigungslasche
- 15: Befestigungsbolzen
- 16: Befestigungsbolzen
- 17: Langloch
- 18: Langloch
- 19: Haltestreifen
- 20: Haltestreifen
- 21: Basisteil
- 22: Ausnehmung
- 23: Ausnehmung
- 24: Achse
- 25: Kopf
- 26: Mutter
- 27: Beilagscheibe
- 28: Elektromotor
- 29: Schnecke
- 30: Schneckenrad
- 31: Getriebe
- 32: Längsachse
- 33: Längsachse

## Patentansprüche

1. Lenksäule für ein Kraftfahrzeug mit einer eine Lenkspindel (1) tragenden Konsoleneinheit (6), die mittels Befestigungsbolzen (15, 16) an einem fahrzeugfesten Teil (12) gehalten ist, wobei die Befestigungsbolzen (15, 16) Langlöcher (17, 18) in der Konsoleneinheit (6) oder im fahrzeugfesten Teil (12) durchsetzen und die Konsoleneinheit (6) im Crashfall ausgehend von einer Ausgangssteilung unter Verschiebung der Befestigungsbolzen (15, 16) in den Langlöchern (17, 18) gegenüber dem fahrzeugfesten Teil (12) verschiebbar ist, wobei ein jeweiliges Langloch (17, 18) zumindest über einen Teil seiner Längserstreckung in einem Haltestreifen (19, 20) angeordnet ist, der in der Ausgangsstellung der Konsoleneinheit (6) eine Biegung aufweist und wobei nach dem Crash die Konsoleneinheit (6) über die Haltestreifen (19, 20) nach wie vor am fahrzeugfesten Teil (12) angehängt ist, **dadurch gekennzeichnet, dass** die Haltestreifen (19, 20) von separaten Teilen gebildet werden, von denen ein Ende an einem weiteren Teil (21) der Konsoleneinheit (6) oder des fahrzeugfesten Teils (12) befestigt ist und das andere Ende frei ist, wobei das freie Ende des jeweiligen Haltestreifens (19, 20) im Montagezustand der Lenksäule, ohne dass ein Fahrzeugcrash aufgetreten ist, in einem Winkelbereich von plus minus 45° zur Längsachse des jeweiligen Befestigungsbolzens (15, 16) nach unten oder nach oben weist, und dass sich die Biegung des jeweiligen Haltestreifens (19, 20) bei einer im Crashfall erfolgenden Verschiebung der Konsoleneinheit (6) gegenüber dem fahrzeugfesten Teil (12) durch Zusammenwirken mit dem Befestigungsbolzen (15, 16) oder einem auf diesem angeordneten Teil zumindest verringert.

2. Lenksäule nach Anspruch 1, **dadurch gekennzeichnet, dass** ein jeweiliger Haltestreifen (19, 20) in der Ausgangsstellung der Konsoleneinheit (6) über mindestens 45°, vorzugsweise über mindestens 60° gebogen ist.

3. Lenksäule nach Anspruch 2, **dadurch gekennzeichnet, dass** ein jeweiliger Haltestreifen (19, 20) in der Ausgangsstellung der Konsoleneinheit (6) über 80° bis 100° gebogen ist.

4. Lenksäule nach einem der Ansprüche 1 bis 3, **dadurch gekennzeichnet, dass** ein jeweiliger Haltestreifen (19, 20) um eine Achse (24) gebogen ist, die parallel zur Ebene des ungebogenen Haltestreifens (19, 20) und rechtwinklig zur Längserstreckung des Haltestreifens (19, 20) liegt.

5. Lenksäule nach einem der Ansprüche 1 bis 4, **dadurch gekennzeichnet, dass** ein jeweiliger Haltestreifen (19, 20) um eine Achse (24) gebogen ist, die rechtwinklig zur Längsachse (11) der Lenkspindel (1) und rechtwinklig zur Längsachse (32, 33) des Befestigungsbolzens (15, 16) ausgerichtet ist.

6. Lenksäulen nach einem der Ansprüche 1 bis 5, **dadurch gekennzeichnet, dass** die Konsoleneinheit (6) die Haltestreifen (19, 20) aufweist.

7. Lenksäule nach einem der Ansprüche 1 bis 6, **dadurch gekennzeichnet, dass** die Dicke des weiteren Teils (21) größer als die des jeweiligen Haltestreifens (19, 20) ist.

8. Lenksäule nach eine der Ansprüche 1 bis 7, **dadurch gekennzeichnet, dass** der Haltestreifen (19, 20) anschließend an die Biegung zu seinem freien Ende hin einen in einer Ebene liegenden Abschnitt aufweist.

9. Lenksäule nach einem der Ansprüche 1 bis 8, **dadurch gekennzeichnet, dass** ein jeweiliger Befestigungsbolzen (15, 16) in der Ausgangsstellung der Konsoleneinheit (6) eine Ausnehmung (22, 23) in einem Basisteil (21) der Konsoleneinheit (6), an dem die Haltestreifen (19, 20) befestigt sind, durchsetzt, wobei die Ausnehmung (22, 23) zum lenkradseitigen Rand des Basisteils (21) offen ist und sich mit einem Abschnitt des Langlochs (17, 18) eines der am Basisteil (21) angebrachten Haltestreifen (19, 20) überdeckt.

10. Lenksäule nach einem der Ansprüche 1 bis 9, **dadurch gekennzeichnet, dass** die Lenkspindel (1) im geöffneten Zustand einer Feststellvorrichtung gegenüber der Konsoleneinheit (6) in Längsrichtung der Lenkspindel (1) und/oder in der Neigung verstellbar ist.

11. Lenksäule nach Anspruch 10, **dadurch gekennzeichnet, dass** die Feststellvorrichtung im Bereich der Konsoleneinheit (6) angeordnet ist, vorzugsweise einen die Konsoleneinheit (6) durchsetzenden Spannbolzen (8) umfasst.

12. Lenksäule nach einem der Ansprüche 1 bis 11, **dadurch gekennzeichnet, dass** die Konsoleneinheit (6) im Bereich ihres lenkradseitigen Endes mit dem fahrzeugfesten Teil (12) über die Befestigungsbolzen (15) verbunden ist.

## Claims

1. A steering column for a motor vehicle, with a bracket unit (6) bearing a steering shaft (1), which unit is held by means of fastening bolts (15, 16) on a vehicle-mounted part (12), the fastening bolts (15, 16) passing through elongate holes (17, 18) in the bracket unit (6) or in the vehicle-mounted part (12) and the bracket unit (6) in the event of a crash, starting from a starting position, being displaceable, with displacement of the fastening bolts (15, 16) in the elongate holes (17, 18) relative to the vehicle-mounted part (12), with a respective elongate hole (17, 18), at least over part of its longitudinal extent, being arranged in a holding strip (19, 20) which in the starting position of the bracket unit (6) has a bend and with, after the crash, the bracket unit (6) still being suspended on the vehicle-mounted part (12) via the holding strip (19, 20), **characterised in that** the holding strips (19, 20) are formed by separate parts, of which one end is fastened to a further part (21) of the bracket unit (6) or of the vehicle-mounted part (12) and the other end of which is free, the free end of the respective holding strip (19, 20) in the assembled state of the steering column, without a vehicle crash having occurred, pointing downwards or upwards in an angular range of plus or minus 45° to the longitudinal axis of the respective fastening bolt (15, 16), and **in that** the bending of the respective holding strip (19, 20) upon a displacement, taking place in the event of a crash, of the bracket unit (6) relative to the vehicle-mounted part (12) is at least reduced by cooperation with the fastening bolt (15, 16) or a part arranged thereon.

2. A steering column according to Claim 1, **characterised in that** a respective holding strip (19, 20) in the starting position of the bracket unit (6) is bent over at least 45°, preferably over at least 60°.

3. A steering column according to Claim 2, **characterised in that** a respective holding strip (19, 20) in the starting position of the bracket unit (6) is bent over 80° to 100°.

4. A steering column according to one of Claims 1 to 3, **characterised in that** a respective holding strip (19, 20) is bent about an axis (24) which lies parallel to the plane of the unbent holding strip (19, 20) and at right-angles to the longitudinal extent of the holding strip (19, 20).

5. A steering column according to one of Claims 1 to 4, **characterised in that** a respective holding strip (19, 20) is bent about an axis (24) which is oriented at right-angles to the longitudinal axis (11) of the steering shaft (1) and at right-angles to the longitudinal axis (32, 33) of the fastening bolt (15, 16).

6. Steering columns [sic] according to one of Claims 1 to 5, **characterised in that** the bracket unit (6) has the holding strip (19, 20).

7. A steering column according to one of Claims 1 to 6, **characterised in that** the thickness of the further part (21) is greater than that of the respective holding strip (19, 20).

8. A steering column according to one of Claims 1 to 7, **characterised in that** the holding strip (19, 20) adjoining the bend has towards its free end a section lying in a plane.

9. A steering column according to one of Claims 1 to 8, **characterised in that** a respective fastening bolt (15, 16) in the starting position of the bracket unit (6) passes through a cutout (22, 23) in a base part (21) of the bracket unit (6), to which part the holding strips (19, 20) are fastened, the cutout (22, 23) being open on the edge, on the steering-wheel side, of the base part (21) and overlapping with a section of the elongate hole (17, 18) of one of the holding strips (19, 20) attached to the base part (21).

10. A steering column according to one of Claims 1 to 9, **characterised in that** the steering shaft (1) in the opened state of a locking device is adjustable relative to the bracket unit (6) in the longitudinal direction of the steering shaft (1) and/or in inclination.

11. A steering column according to Claim 10, **characterised in that** the locking device is arranged in the region of the bracket unit (6), preferably comprises a tightening bolt (8) which passes through the bracket unit (6).

12. A steering column according to one of Claims 1 to 11, **characterised in that** the bracket unit (6) in the region of its end, on the steering-wheel side, is connected to the vehicle-mounted part (12) via the fastening bolts (15).

## Revendications

1. Colonne de direction pour un véhicule automobile, avec une unité de console (6) supportant un arbre de direction (1) maintenu au moyen de boulons de fixation (15, 16) sur une partie fixe de véhicule (12), lesdits boulons de fixation (15, 16) traversant des trous oblongs (17, 18) dans l'unité de console (6) ou la partie fixe de véhicule (12), et l'unité de console (6) étant en cas de collision déplaçable depuis une position initiale par rapport à la partie fixe de véhicule (12), par déplacement des boulons de fixation (15, 16) dans les trous oblongs (17, 18), chaque trou oblong (17, 18) étant ménagé dans une bande de maintien (19, 20) au moins sur une partie de son extension longitudinale, ladite bande de maintien présentant une courbure en position initiale de l'unité de console (6), et l'unité de console (6) restant accrochée par les bandes de maintien (19, 20) à la partie fixe de véhicule (12) après collision, **caractérisée en ce que** les bandes de maintien (19, 20) sont formées par des pièces séparées, dont une extrémité est fixée contre une autre pièce (21) de l'unité de console (6) ou de la partie fixe de véhicule (12), et dont l'autre extrémité est libre, l'extrémité libre de chaque bande de maintien (19, 20) pointant vers le haut ou vers le bas suivant une plage angulaire de plus ou moins 45° par rapport à l'axe longitudinal de chaque boulon de fixation (15, 16), en état de montage de la colonne de direction sans que le véhicule soit entré en collision, et **en ce que** la courbure de chaque bande de maintien (19, 20) est au moins diminuée en cas de déplacement de l'unité de console (6) par rapport à la partie fixe de véhicule (12), survenant lors d'une collision, par coopération avec le boulon de fixation (15, 16) ou une pièce disposée sur celui-ci.

2. Colonne de direction selon la revendication 1, **caractérisée en ce que** chaque bande de maintien (19, 20) est en position initiale de l'unité de console (6) courbée suivant un angle minimal de 45°, de préférence suivant un angle minimal de 60°.

3. Colonne de direction selon la revendication 2, **caractérisée en ce que** chaque bande de maintien (19, 20) est en position initiale de l'unité de console (6) courbée suivant un angle de 80° à 100°.

4. Colonne de direction selon l'une des revendications 1 à 3, **caractérisée en ce que** chaque bande de maintien (19, 20) est courbée autour d'un axe (24) parallèle au plan de la bande de maintien non courbée (19, 20) et perpendiculaire à l'extension longitudinale de la bande de maintien (19, 20).

5. Colonne de direction selon l'une des revendications 1 à 4, **caractérisée en ce que** chaque bande de maintien (19, 20) est courbée autour d'un axe (24) disposé perpendiculairement à l'axe longitudinal (11) de l'arbre de direction (1) et perpendiculairement à l'axe longitudinal (32, 33) du boulon de fixation (15, 16).

6. Colonne de direction selon l'une des revendications 1 à 5, **caractérisée en ce que** l'unité de console (6) comprend les bandes de maintien (19, 20).

7. Colonne de direction selon l'une des revendications 1 à 6, **caractérisée en ce que** l'épaisseur de l'autre pièce (21) est supérieure à celle de chaque bande de maintien (19, 20).

8. Colonne de direction selon l'une des revendications 1 à 7, **caractérisée en ce que** la bande de maintien (19, 20) présente vers son extrémité libre une partie adjacente à la courbure et située sur un plan.

9. Colonne de direction selon l'une des revendications 1 à 8, **caractérisée en ce que** chaque boulon de fixation (15, 16) traverse en position initiale de l'unité de console (6) un évidement (22, 23) dans une pièce de base (21) de l'unité de console (6) contre laquelle sont fixées les bandes de maintien (19, 20), ledit évidement (22, 23) étant ouvert sur le bord de la pièce de base (21) situé du côté du volant, et coïncidant avec une partie du trou oblong (17, 18) d'une bande de maintien (19, 20) appliquée contre la pièce de base (21).

10. Colonne de direction selon l'une des revendications 1 à 9, **caractérisée en ce que** l'arbre de direction (1) est en état d'ouverture d'un dispositif de blocage réglable par rapport à l'unité de console (6) dans la direction longitudinale de l'arbre de direction (1) et/ou est réglable en inclinaison.

11. Colonne de direction selon la revendication 10, **caractérisée en ce que** le dispositif de blocage est disposé au niveau de l'unité de console (6), et comprend de préférence un boulon de serrage (8) traversant l'unité de console (6).

12. Colonne de direction selon l'une des revendications 1 à 11, **caractérisée en ce qu'**au niveau de son extrémité située du côté du volant, l'unité de console (6) est raccordée à la partie fixe de véhicule (12) par les boulons de fixation (15).
